# FASCICULE DE BREVET EUROPEEN

(11) **EP 1 981 920 B1**
(45) Date de publication et mention de la délivrance du brevet: **30.06.2010**
(21) Numéro de dépôt: 07718168.3
(22) Date de dépôt: 09.01.2007
(51) Int. Cl.: C08F 299/06, C08F 220/28, C08F 220/58, C08F 2/24

(54) **PROCEDE DE PREPARATION DE LATEX STABILISES PAR POLYMERISATION EN EMULSION**
VERFAHREN ZUR HERSTELLUNG VON STABILISIERTEM LATEX MITTELS EMULSIONSPOLYMERISATION
PROCESS FOR PREPARING STABILIZED LATICES BY EMULSION POLYMERIZATION

(30) Priorité: 18.01.2006 FR 0600439
(43) Date de publication de la demande: 22.10.2008
(73) Titulaire: ARKEMA FRANCE, 92700 Colombes (FR)
(72) Inventeur: HIDALGO, Manuel, F-69530 Brignais (FR)
(74) Mandataire: Bonnel, Claudine
(86) Numéro de dépôt international: PCT/FR2007/050630
(87) Numéro de publication internationale: WO 2007/083051

(56) Documents cités:
- EP-A- 0 567 214
- WO-A-01/74736
- DE-A1- 3 926 326
- FR-A- 2 360 646
- FR-A- 2 851 937
- US-A- 5 489 645
- PATENT ABSTRACTS OF JAPAN vol. 1999, no. 12, 29 octobre 1999 (1999-10-29) & JP 11 189608 A (TOAGOSEI CO LTD), 13 juillet 1999 (1999-07-13)

## Description

### Domaine technique

L'invention concerne la stabilisation des latex obtenus par polymérisation en émulsion et plus particulièrement l'utilisation de monomères (méth)acryliques de type esters ou amides (méth)acryliques de polyéthylène glycol ou de poly(éthylène-co-propylène) glycol ou de monoalkyl éther de polyéthylène glycol ou de monoalkyl éther de poly(éthylène-co-propylène) glycol, capables de contribuer à la stabilisation au cours d'un procédé de préparation de latex par polymérisation en émulsion d'au moins un monomère polymérisable.

Par latex, on entend des dispersions colloïdales de particules majoritairement hydrophobes de polymères, plus particulièrement des dispersions aqueuses de particules de polymères telles qu'elles sont obtenues par polymérisation en émulsion.

Le terme ester ou amide (méth)acrylique signifie ester ou amide de l'acide acrylique ou de l'acide méthacrylique.

Par le terme polymérisation en émulsion dans le cadre de l'invention, outre la polymérisation en émulsion classique, on entend aussi des méthodes de synthèse apparentées, telles que la polymérisation en mini-émulsion et en micro-émulsion, dans la mesure où ces techniques font également appel à l'utilisation de tensioactifs. Ces différentes techniques sont décrites dans des ouvrages de référence sur la polymérisation en émulsion, tel que par exemple le document EL-AASSER, M.S. & LOVELL, P.A. éditeurs. Emulsion Polymerization, and Emulsion Polymers. John Wiley & Sons, 1997.

Ces latex stabilisés trouvent des applications dans de nombreux domaines d'utilisation, comme ceux des matériaux (PS, PMMA, PVC, élastomères), des peintures et vernis, des liants et des traitements des fibres pour le papier et le textile, des adhésifs, des additifs pour le béton, les bitumes ou les plastiques.

### Technique antérieure

Le document EP 095 263 décrit un procédé de fabrication de dispersions aqueuses de polymères avec une stabilisation exclusivement stérique, en utilisant, d'une part, un amorceur de polymérisation azoïque non ionisable soluble dans la phase aqueuse et d'autre part, un stabilisant qui est un copolymère séquencé ou greffé contenant un composant polymérique qui peut être solvaté par la phase aqueuse et un composant polymérique d'un autre type qui ne peut pas être solvaté par la phase aqueuse. Ce stabilisant peut être obtenu in situ par réaction de copolymérisation avec les monomères de la dispersion. L'utilisation d'amorceurs non-chargés est une caractéristique indissociable du procédé puisqu'il s'agit d'obtenir des dispersions stabilisées exclusivement par voie stérique, et donc un système non ionique, sans charge provenant du stabilisant ou de l'amorceur de polymérisation.

Le document US 4 385 164 décrit la préparation de stabilisants de dispersion constitués de copolymères à blocs comportant un bloc hydrophile et un bloc hydrophobe avec des groupes latéraux à fonctionnalité réactive, tels que par exemple des groupes époxy ou des insaturations éthyléniques. Le document US 4 385 164 décrit également un procédé de polymérisation d'un monomère à insaturation éthylénique dans l'eau en présence d'un stabilisant de dispersion tel que préalablement préparé.

La demande WO 01/74736 décrit un procédé de préparation de polymères dispersants pour charges minérales tel que le ciment, par polymérisation en solution de dérivés acryliques. Ce procédé permet de préparer des solutions aqueuses contenant une concentration élevée de copolymère acrylique.

Le document FR 2 851 937 concerne une polymérisation en solution aqueuse d'un mélange de monomères (méth)acryliques. L'utilisation d'un système de contrôle des masses moléculaires intervenant simultanément lors des étapes d'amorçage et de transfert radicalaire permet de préparer un dispersant hydrosoluble avec une distribution des masses moléculaires contrôlée et possédant des propriétés améliorées.

Dans le document FR 2 360 646, une dispersion de résine est obtenue en polymérisant un monomère à insaturation éthylénique capable de former m polymère insoluble en milieu aqueux, dans une solution aqueuse contenant un polymère soluble dans l'eau dérivant de monomères acryliques. La stabilisation de la dispersion est réalisée par la présence de ce polymère acrylique, soluble dans l'eau, obtenu préalablement par une étape de polymérisation en solution.

### Exposé de l'invention

Le procédé de préparation d'un latex stabilisé, par polymérisation en émulsion d'au moins un monomère polymérisable selon l'invention est mis en oeuvre en présence d'un amorceur de polymérisation hydrosoluble et d'au moins un agent émulsifiant, caractérisé en ce que l'on utilise un amorceur de polymérisation hydrosoluble ionisable et en ce que l'agent émulsifiant est remplacé au moins partiellement par des molécules polymères stabilisantes formées in situ par introduction d'au moins un monomère (méth)acrylique de type ester ou amide (méth)acrylique de polyéthylène glycol ou de poly(éthylène-co-propylène) glycol ou de monoalkyl éther de polyéthylène glycol ou de monoalkyl éther de poly(éthylène-co-propylène) glycol, dans lequel le groupe alkyl contient de 1 à 18 atomes de carbone, et de préférence de 1 à 4 atomes de carbone, pendant au moins l'une des étapes de la polymérisation en émulsion.

Le milieu de polymérisation comprend une phase organique liquide et une phase aqueuse liquide, ladite phase organique liquide comprenant de préférence plus de 50 % en poids de monomère(s) à polymériser et ladite phase aqueuse comprenant de préférence au moins 50% en poids d'eau. L'amorceur de polymérisation est, en général, soluble dans la phase aqueuse (cas de la polymérisation en émulsion classique).

Sans que la demanderesse soit tenue à une quelconque explication, elle pense que la stabilisation du latex dans le procédé selon l'invention se fait par :
- Les groupes ioniques provenant de l'amorceur de polymérisation ionisable (stabilisation électrostatique)
- L'agent émulsifiant conventionnel présent dans le milieu de polymérisation, c'est à dire un tensioactif permettant de stabiliser l'émulsion par stabilisation stérique et/ou électrostatique
- Les molécules polymères stabilisantes faisant intervenir lesdits monomères esters ou amides (méth)acryliques de polyéthylène glycol ou de poly(éthylène-co-propylène) glycol, ou de monoalkyl éther de polyéthylène glycol ou de monoalkyl éther de poly(éthylène-co-propylène) glycol, obtenues in situ dans le milieu de polymérisation (stabilisation stérique).

L'introduction d'un monomère (méth)acrylique de l'invention pendant au moins l'une des étapes de la polymérisation en émulsion permet la copolymérisation entre ledit monomère et un ou plusieurs autres monomères polymérisables du système en émulsion à polymériser. Cette copolymérisation contribue à l'ancrage des molécules polymères stabilisantes ainsi obtenues en surface des particules colloïdales du latex. Elle contribue aussi au développement du caractère amphiphile de ces molécules polymères stabilisantes obtenues à partir, d'une part, des unités constitutives hydrophiles des monomères ester ou amide (méth)acrylique de polyéthylène glycol ou de poly(éthylène-co-propylène) glycol ou de monoalkyl éther de polyéthylène glycol ou de monoalkyl éther de poly(éthylène-co-propylène) glycol et d'autre part, des unités monomères plus hydrophobes du système à polymériser lui-même. Dans la structure des molécules polymères stabilisantes de l'invention, les unités hydrophobes ne sont pas distribuées sous forme de blocs et proviennent directement des unités monomères du système à polymériser en émulsion. L'ancrage en surface et le développement du caractère amphiphile de ces molécules polymères stabilisantes apportent un effet stabilisant amélioré par rapport à celui obtenu avec les agents émulsifiants classiques.

D'autres caractéristiques et avantages de l'invention ressortiront mieux à la lecture de la description qui suit.

### Exposé détaillé de l'invention

Le monomère (méth)acrylique de l'invention peut être introduit dans le milieu de polymérisation à raison de 0,05 % à 30 %, de préférence de 0,1 % à 10 %, en masse par rapport à la masse de monomère(s). Il peut être introduit en mélange avec les monomères à polymériser du système ou séparément. Il peut être introduit en une seule fois à un moment déterminé de la polymérisation en émulsion, pouvant être le début (conversion des monomères en polymère égale à 0), ou un autre moment de la polymérisation différent du début (conversion des monomères en polymère supérieure à zéro). Il peut être introduit en plusieurs fois par ajouts discontinus à différents moments (différents taux de conversion des monomères en polymère) de la polymérisation en émulsion. Il peut, enfin, être introduit par ajout continu, pendant un temps donné pouvant couvrir la totalité du temps de réaction (temps de polymérisation,) ou seulement une partie du temps de réaction. De préférence, le monomère méthacrylique de l'invention est introduit en mélange avec les monomères à polymériser, par exemple, en suivant la pratique courante qui consiste à introduire au moins une partie des monomères à polymériser sous forme d'une émulsion aqueuse comportant de l'eau, des monomères et des tensioactifs (dite pré-émulsion). Ladite pré-émulsion est souvent ajoutée au réacteur en continu pendant un temps donné pouvant couvrir la totalité du temps de polymérisation. Le monomère (méth)acrylique de l'invention peut avantageusement remplacer la totalité ou une partie du tensioactif conventionnel utilisé pour stabiliser ladite pré-émulsion.

Le monomère (méth)acrylique est un ester ou une amide (méth)acrylique de polyéthylène glycol ou de poly(éthylène-co-propylène) glycol ou de monoalkyl éther de polyéthylène glycol ou de monoalkyl éther de poly(éthylène-co-propylène) glycol, dans lequel le groupe alkyl contient de 1 à 18 atomes de carbone, et de préférence de 1 à 4 atomes de carbone. D'une manière générale, ces esters ou amides (méth)acryliques peuvent être préparés à partir des alcools correspondants (polyéthylène glycol ou poly(éthylène-co-propylène) glycol ou monoalkyl éther de polyéthylène glycol ou monoalkyl éther de poly(éthylère-co-propylène) glycol), par réaction d'estérification directe avec l'acide (méth)acrylique, ou d'amidification directe avec l'acrylamide ou la méthacrylamide, ou alors par réaction avec l'anhydride (méth)acrylique, ou avec l'halogénure d'acide (méth)acrylique. Ils peuvent être préparés aussi par réaction de transestérification ou de transamidification à partir d'esters ou amides (méth)acryliques comme, par exemple, les alkyl (méth)acrylates. Ils peuvent, enfin, être préparés par alkoxylation d'un monomère ester ou amide (méth)acrylique comportant une fonction alcool comme, par exemple, l'hydroxyéthyl (méth)acrylate.

Un exemple de préparation de monomères (méth)acryliques utiles pour l'invention est décrit dan la demande de brevet internationale publiée sous le numéro WO 01/74736. Ces monomères sont, en plus, disponibles commercialement.

Plus particulièrement, l'ester ou amide (méth)acrylique de l'invention est de masse moléculaire en nombre d'au moins 750 daltons, de préférence allant de 1000 à 10000 daltons. De préférence, le monomère (méth)acrylique est un méthacrylate de méthoxy polyéthylène glycol (MAMPEG), et plus particulièrement un méthacrylate de méthoxy polyéthylène glycol de masse moléculaire en nombre d'au moins 1000 daltons, de préférence allant de 1000 à 6000 daltons.

Dans l'une des formes préférées de l'invention, le monomère (méth)acrylique contient de l'acide (méth)acrylique, comme impureté, ou est additivé d'un acide carboxylique insaturé tel que l'acide (méth)acrylique dans des proportions pouvant aller jusqu'à 20% en poids, de préférence comprise entre 2 et 10% en poids par rapport au monomère (méth)acrylique. Ceci a pour effet de favoriser la stabilisation combinée stérique/électrostatique du latex, car les unités d'acide carboxylique insaturé; une fois copolymérisées avec les monomères de l'émulsion apportent, en plus, une stabilité ionique.

L'agent émulsifiant présent dans le milieu de polymérisation est un agent émulsifiant conventionnel, qui peut être un tensioactif anionique, cationique ou non ionique. L'agent émulsifiant conventionnel peut être aussi un tensioactif amphotère ou quaternaire ou fluoré. Il peut être également constitué d'un mélange de produits issus des catégories précédentes. Des exemples d'agents émulsifiants utilisables sont les sulfates d'alkyle ou d'aryle, les sulfonates d'alkyle ou d'aryle, les sels d'acide gras, les alcools polyvinyliques, les alcools gras polyéthoxylés, les alkyl phénol polyéthoxylés, les dérivés des polysaccharides, les dérivés du sorbitan. A titre d'exemple, l'agent émulsifiant peut être le laurylsulfate de sodium, le dodécylbenzenesulfonate de sodium, le stéarate de sodium, un nonylphénolpolyéthoxylé, le dihexylsulfosuccinate de sodium, le dioctylsulfosuccinate de sodium, le bromure de lauryl diméthyl ammonium, la lauryl amido bétaine, le perfluoro octyl acétate de potassium ou un mélange d'alcanesulfonates.

L'agent émulsifiant conventionnel peut également être un copolymère amphiphile à blocs ou statistique ou greffé, comme les copolymères du styrène sulfonate de sodium et en particulier le polystyrène-b-poly (styrène sulfonate de sodium) ou tout copolymère amphiphile préparé par toute autre technique de polymérisation.

L'agent émulsifiant conventionnel peut être introduit dans le milieu de polymérisation à raison de 0,1% à 10 % en masse par rapport à la masse de monomère (s) et de préférence à raison de 0,5 à 8% en masse par rapport à la masse de monomère(s) à polymériser.

Dans le procédé selon l'invention, l'agent émulsifiant conventionnel est remplacé totalement ou partiellement par les molécules polymères stabilisantes formées in situ. Dans un mode de réalisation préféré de l'invention, tout composant non-ionique de l'agent émulsifiant conventionnel est substitué complètement par les molécules polymères stabilisantes forées in situ, ce qui évite de mettre en oeuvre des agents émulsifiants considérés comme nocifs pour l'environnement, tels que les alkyl phénols polyéthoxylés.

Pour effectuer la polymérisation en émulsion selon l'invention, on utilise un amorceur de polymérisation hydrosoluble ionisable. On peut citer par exemple les sels métalliques et ammoniacaux de l'acide 4,4' azobis (4-cyanopentanoïque), les sels du persulfate, tels que le persulfate de sodium, le persulfate de potassium et le persulfate d'ammonium. Ces amorceurs peuvent être utilisés seuls, mais ils peuvent être combinés également avec des réducteurs minéraux ou organiques tels que le bisulfite et le métasulfite de sodium ou de potassium, la vitamine C, les hypophosphites de sodium ou de potassium, le sodium formaldéhyde sulfoxylate. Lorsque l'amorceur de polymérisation est constitué d'un oxydant et d'un réducteur, on parle d'un couple redox ; parmi les couples redox utiles pour l'invention, on peut citer le couple eau oxygénée/sel de l'ion ferreux, le couple (persulfate de sodium, potassium ou ammonium)/(métabisulfite de sodium ou de potassium), le couple (persulfate de sodium, potassium ou ammonium)/(sodium formaldéhyde sulfoxylate).

L'amorceur de polymérisation est ajouté à raison de 0,005 à 10 % en masse par rapport à la masse de monomère(s,) et de préférence, à raison de 0,01 à 2,5% en masse par rapport à la masse de monomère(s) à polymériser. Il peut-être ajouté en une seule fois au début de la polymérisation ou en plusieurs fois à différents taux de conversion des monomères, ou encore en continu pendant une partie ou la totalité du temps de polymérisation.

L'amorceur de polymérisation ionisable contribue par la présence de sa charge à la stabilisation du latex.

Le monomère polymérisable peut être choisi parmi les monomères présentant une double liaison carbone-carbone susceptible de polymériser, tels que les monomères vinyliques, vinylidéniques, diéniques et oléfiniques, allyliques, acryliques, méthacryliques, etc.

Les monomères considérés peuvent être un monomère vinylaromatique tel que le styrène ou les styrènes substitués notamment l'α-méthylstyrène et le styrène sulfonate de sodium, un diène tel que le butadiène ou l'isoprène, un monomère acrylique tel que l'acide acrylique ou ses sels, les acrylates d'alkyle, de cycloalkyle ou d'aryle tels que l'acrylate de méthyle, d'éthyle, de butyle, d'éthylhexyle ou de phényle, les acrylates d'hydroxyalkyle tel que l'acrylate de 2-hydroxyéthyle, les acrylates d'étheralkyle tel que l'acrylate de 2-méthoxyéthyle, les acrylates d'alcoxy- ou aryloxy-polyalkylèneglycol tels que les acrylates de méthoxypolyéthylèneglycol, les acrylates d'éthoxypolyéthylèneglycol, les acrylates de méthoxypolypropylèneglycol, les acrylates de méthoxy-polyethylèneglycol-polypropylèneglycol ou leurs mélanges, les acrylates d'aminoalkyle tel que l'acrylate de 2-(diméthylamino)éthyle (ADAME), les acrylates de sel d'amines tels que le chlorure ou le sulfate de [2-(acryloyloxy)éthyl]triméthylammonium ou le chlorure ou le sulfate de [2-(acryloyloxy)éthyl]diméthylbenzylammonium, les acrylates fluorés, les acrylates silylés, les acrylates phosphorés tels que les acrylates de phosphate d'alkylèneglycol, un monomère méthacrylique comme l'acide méthacrylique ou ses sels, les méthacrylates d'alkyle, de cycloalkyle, d'alkényle ou d'aryle tels que le méthacrylate de méthyle, de lauryle, de cyclohexyle , d'allyle ou de phényle, les méthacrylates d'hydroxyalkyle tel que le méthacrylate de 2-hydroxyéthyle ou le méthacrylate de 2-hydroxypropyle, les méthacrylates d'étheralkyle tel que le méthacrylate de 2-éthoxyéthyle, les méthacrylates d'alcoxy- ou aryloxy-polyalkylèneglycol tels que les méthacrylates de méthoxypolyéthylèneglycol, les méthacrylates d'éthoxypolyéthylèneglycol, les méthacrylates de méthoxypolypropylèneglycol, les méthacrylates de méthoxy-polyethylèneglycol-polypropylèneglycol ou leurs mélanges, les méthacrylates d'aminoalkyle tel que le méthacrylate de 2-(diméthylamino)éthyle (MADAME) ou le méthacrylate de 2-(tert-butylamino)éthyle (MATBAE), les méthacrylates de sel d'amines tels que le chlorure ou le sulfate de [2-(méthacryloyloxy)éthyl]triméthylammonium ou le chlorure ou le sulfate de [2-(méthacryloyloxy)éthyl]diméthylbenzylammonium, les méthacrylates fluorés tels que le méthacrylate de 2,2,2-trifluoroéthyle, les méthacrylates silylés tels que le 3-méthacryloylpropyltriméthylsilane, les méthacrylates phosphorés tels que les méthacrylates de phosphate d'alkylèneglycol, le méthacrylate d'hydroxyéthylimidazolidone, le méthacrylate d'hydroxyéthylimidazolidinone, le méthacrylate de 2-(2-oxo-1-imidazolidinyl)éthyle, l'acrylonitrile, l'acrylamide ou les acrylamides substitués, la 4acryloylmorpholine, le N-méthylolacrylamide, le chlorure d'acrylamidopropyltriméthylammonium (APTAC), l'acide acrylamidométhylpropane-sulfonique (AMPS) ou ses sels, le méthacrylamide ou les méthacrylamides substitués, le 2-méthyl-N-[2-(2-oxoimidazolidinyl)éthyl]acrylamide, le N-méthylolméthacrylamide, le chlorure de méthacrylamidopropyltriméthyl ammonium (MAPTAC), l'acide itaconique, l'acide maléique ou ses sels, l'anhydride maléique, les maléates ou hémimaléates d'alkyle ou d'alcoxy- ou aryloxy-polyalkylèneglycol, la vinylpyridine, la vinylpyrrolidinone, les (alkoxy) poly(alkylène glycol) vinyl éther ou divinyl éther, tels que le méthoxy poly(éthylène glycol) vinyl éther, le poly(éthylène glycol) divinyl éther, les monomères oléfiniques, tels que l'éthylène, le butène, l'hexène et le l'-octène, ainsi que les monomères oléfiniques fluorés, et les monomères vinylidéniques, tel que le fluorure de vinylidène, utilisés seuls ou en mélange d'au moins deux monomères précités.

Pour effectuer le procédé selon l'invention, on met en oeuvre des conditions bien connues de l'homme du métier et utilisées fréquemment lors des réactions de polymérisation en émulsion classique en milieu aqueux, (ou en mini-émulsion ou micro-émulsion). Le procédé selon l'invention peut donc s'adapter facilement aux méthodes et procédés de fabrication industrielle existants en substituant uniquement une matière première (agent émulsifiant conventionnel) par une autre (monomère (méth)acrylique de l'invention). Il ne nécessite pas d'étape préalable de préparation d'un polymère stabilisant.

Les polymères obtenus selon le procédé de l'invention présentent généralement des masses moléculaires élevées, plus particulièrement la masse moléculaire moyenne en nombre est supérieure à 40 000, de préférence supérieure à 60 000, et/ou la masse moléculaire moyenne en poids est supérieure à 150 000.

La présente invention revendique aussi l'utilisation d'un monomère (méth)acrylique de type ester ou amide (méth)acrylique de polyéthylène glycol ou de poly(éthylène-co-propylène) glycol ou de monoalkyl éther de polyéthylène glycol ou de monoalkyl éther de poly(éthylène-co-propylène) glycol, dans lequel le groupe alkyl contient de 1 à 18 atomes de carbone, et de préférence de 1 à 4 atomes de carbone, pour stabiliser des latex obtenus par polymérisation en émulsion d'au moins un monomère polymérisable, en présence d'un amorceur de polymérisation ionisable et éventuellement d'un agent émulsifiant conventionnel, caractérisé en ce que ledit monomère est introduit dans le milieu de polymérisation pendant au moins l'une des étapes de la polymérisation en émulsion.

Un autre objet de l'invention concerne les latex stabilisés de polymères, obtenus selon le procédé de l'invention.

Par htex stabilisé, on entend un latex présentant une stabilité mécanique et une stabilité chimique, c'est-à-dire ne présentant pas de signes de floculation dans les conditions de test décrites ci-après.

Au sein de ce latex, l'ensemble des particules de polymère présente un diamètre moyen inférieur à 2µm, généralement compris entre 0,04 µm et 1µm.

Ces latex stabilisés conduisent à des matériaux ou des revêtements dont les propriétés ne sont pas altérées par un relargage des agents stabilisants en surface, comme cela est généralement le cas avec les tensioactifs classiques, du fait de l'accrochage chimique aux particules de latex, des molécules polymères stabilisantes.

Dans les exemples qui suivent pour illustrer l'invention, sans toutefois en limiter la portée, les techniques de caractérisation suivantes ont été utilisées :
- Taux d'extrait sec du latex : mesuré à l'aide d'une thermobalance METTLER TOLEDO:HR73 Halogen Moisture Analyzer, chauffant à au moins 150°C jusqu'à poids constant.
- Diamètre moyen des particules du latex : par diffusion de la lumière (appareil MALVERN Lo-C)
- Stabilité mécanique du latex : mesurée en cisaillant 150 - 200 ml de latex filtré (maille 150 microns) à l'aide d'un mélangeur intensif comme par exemple un Hamilton Beach à la vitesse de 12000 tpm pendant 30 minutes. Si le latex flocule, il est filtré (maille 100 microns) et le floculat est pesé.
- Stabilité chimique : vérifiée en rajoutant à 25 ml de latex filtré (maille 150 microns) sous agitation pendant 15 minutes, 25 ml d'une solution de chlorure de calcium à 1% en poids, ou à 10% en poids si le test à 1% ne donne pas de floculation.
Les matières suivantes ont été utilisées :
- persulfate de potassium (ALDRICH) : amorceur de polymérisation ionisable
- Emulgator^{©}K-30 (BAYER) : agent émulsifiant conventionnel à base d'un mélange d'alcanesulfonates secondaires
- méthacrylate de méthoxy polyéthylène glycol (MAMPEG) de masse moléculaire moyenne en nombre, Mn, 2080, sans impureté ionisable (ALDRICH)
- acrylate de butyle (ARKEMA)
- méthyl méthacrylate (ARKEMA)
- méthacrylate de méthoxy polyéthylène glycol de masse moléculaire moyenne en nombre, Mn, 2080 contenant de l'acide méthacrylique comme impureté ionisable : Norsocryl^{©} N402 (ARKEMA)

### Exemples de réalisation

### Exemple 1 : Préparation d'un latex avec ajout d'un monomère méthacrylique de type méthacrylate de méthoxy polyéthylène glycol (MAMPEG) sans impureté ionisable

Dans un réacteur de polymérisation équipé d'une double enveloppe permettant la circulation d'un fluide caloporteur pour chauffer / refroidir le système, d'un piquage permettant l'introduction d'une sonde pour mesurer la température du milieu, d'un piquage permettant l'introduction d'azote gazeux pour chasser l'oxygène qui inhibe la réaction de polymérisation, d'un agitateur lié à un moteur permettant de tourner à vitesse variable, de deux entrées permettant l'ajout d'additifs et d'une sortie de vapeurs liée à un système de condensation / reflux, on charge 400 g d'eau déminéralisée. L'agitation est mise en route à 150 tours par minute (tpm) et un flux d'azote est déclenché par le piquage d'azote de manière à dégazer le pied de cuve pendant au moins 15 minutes avec un barbotage vigoureux. Pendant ce temps, on prépare dans des récipients adéquats, les trois mélanges suivants :
a) une solution de 0,1 g de persulfate de potassium dans 1 g d'eau;
b) une pré-émulsion de monomères obtenue comme suit : 180 g d'eau déminéralisée sont, d'abord mélangés avec 12 g d'une solution à 40% d'Emulgator^{©} K-30, ensuite, sont rajoutés à cette solution, 27,6 g d'une solution à 50% en poids de MAMPEG (ALDRICH), 141 g d'acrylate de butyle, et 141 g de méthyl méthacrylate, le tout sous agitation ;.
c) une solution de 1,2 g de persulfate de potassium dans 10,26 g d'eau déminéralisée.

Le réacteur est mis en chauffe jusqu'à la valeur cible approximative de 75°C. Lorsque cette température est atteinte, le barbotage d'azote est réduit à un bullage et 6g de la pré-émulsion de monomères (b) préparée ci-dessus sont introduits dans le réacteur. La première solution d'amorceur (a) est introduite, à son tour, dans le réacteur et la température de réaction est contrôlée à 75°C +/- 2°C, pendant le blanchiment du milieu réactionnel (formation de la semence de latex). La consigne de chauffe est ensuite montée de manière à atteindre la température de 81°C dans le réacteur. Lorsque cette température est atteinte, on démarre le dosage continu à l'aide de pompes ou de pousse-seringues appropriés du restant de la pré-émulsion de monomères et de la deuxième solution d'amorceur (c) préparée ci-dessus. La pré-émulsion et l'amorceur (c) (coulées) sont dosés dans le réacteur en parallèle (sans les mélanger avant l'introduction dans le réacteur) pendant un temps de coulée de 2 heures et 30 minutes, tout en maintenant la température du réacteur à 81°C +/- 2°C. A la fin de l'ajout, les lignes sont rincées avec 50 g d'eau déminéralisée qui rentrent dans le réacteur et la température de celui-ci est montée à 85°C et maintenue à cette valeur +/- 2°C pendant 2 heures supplémentaires, avant de refroidir et de décharger le produit.
Le latex ainsi obtenu a présenté un taux d'extrait sec de 31,19% en poids.
La taille moyenne des particules a été de 359 nm.
Le latex de cet exemple n'a pas présenté de floculation, ni pendant, ni après le passage dans l'appareil cisaillant ; sa stabilité mécanique est donc considérée comme étant excellente.
Le latex de cet exemple n'a pas présenté de signes de floculation, même avec la solution à 10% de chlorure de calcium ; sa stabilité chimique est donc considérée comme étant excellente.

### Exemple 2 : Préparation d'un latex avec ajout d'un monomère méthacrylique de type méthacrylate de méthoxy polyéthylène glycol comportant de l'acide méthacrylique comme impureté ionisable (Norsocryl^{©} N402).

On procède comme pour l'exemple 1, à l'exception de la préparation de la pré-émulsion b) qui est obtenue comme suit :
b) 180 g d'eau déminéralisée sont d'abord mélangés avec 12 g d'une solution à 40% d'Emulgator^{©} K-30, ensuite sont rajoutés à cette solution, 29 g de Norsocryl N402 (ARKEMA), solution à 60% en poids de méthacrylate de méthoxy polyéthylène glycol, contenant également de l'ordre de 2-4% en poids d'acide méthacrylique, 141 g d'acrylate de butyle, 146 g de méthyl méthacrylate, et 4 gouttes d'un antimousse (Foamaster^{©}), le tout sous agitation ;.

Le latex ainsi obtenu a présenté un taux d'extrait sec de 31,66% en poids.
La taille moyenne des particules a été de 376 nm.

La stabilité mécanique du latex a été excellente.
Le latex de cet exemple a été soumis au test de stabilité chimique et il n'a pas présenté de signes de floculation, même avec la solution à 10% de chlorure de calcium ; sa stabilité chimique est donc considérée comme étant excellente.

### Exemple 3 (comparatif) : Préparation d'un latex sans ajout d'un monomère méthacrylique de type méthacrylate de méthoxy polyéthylène glycol

Le latex des exemples 1 et 2 est préparé sans ajout de méthacrylates de méthoxy polyéthylène glycol.
On procède comme précédemment, à l'exception de la préparation de la pré-émulsion b) qui est obtenue comme suit :
b) une pré-émulsion de monomères obtenue comme suit : 180 g d'eau déminéralisée sont, d'abord mélangés avec 12 g d'une solution à 40% d'Emulgator^{©} K-30, ensuite sont rajoutés à cette solution, 141 g d'acrylate de butyle, 141 g de méthyl méthacrylate, et 4 gouttes d'antimousse (Foamaster^{©}) le tout sous agitation.

Le latex ainsi obtenu a présenté un taux d'extrait sec de 32,00% en poids.
La taille moyenne des particules a été de 325 nm.
La stabilité mécanique du latex s'est avérée mauvaise, car le latex a floculé pendant le test. La stabilité chimique a été très mauvaise, puisque lé latex a floculé avec l'ajout de la solution à 10% de chlorure de calcium, mais aussi avec l'ajout de la solution à 1% de chlorure de calcium.

## Revendications

1. Procédé de préparation d'un latex stabilisé, par polymérisation en émulsion d'au moins un monomère polymérisable en présence d'au moins un amorceur de polymérisation hydrosoluble et d'au moins un agent émulsifiant, **caractérisé en ce que** l'on utilise un amorceur de polymérisation hydrosoluble ionisable et **en ce que** l'agent émulsifiant est remplacé au moins partiellement par des molécules polymères stabilisantes formées in situ par introduction d'un monomère (méth)acrylique de type ester ou amide (méth)aciylique de polyéthylène glycol ou de poly(éthylène-co-propylène) glycol ou de monoalkyl éther de polyéthylène glycol ou de monoalkyl éther de poly(éthylène-co-propylène) glycol, dans lequel le groupe alkyl contient de 1 à 18 atomes de carbone, et de préférence de 1 à 4 atomes de carbone, pendant au moins l'une des étapes de la polymérisation en émulsion.

2. Procédé selon la revendication 1, **caractérisé en ce que** le monomère (méth)acrylique est introduit dans le milieu de polymérisation à raison de 0,05 % à 30 %, de préférence de 0,1 % à 10 %,en masse par rapport à la masse de monomère(s).

3. Procédé selon la revendication 1 ou 2, **caractérisé en ce que** le monomère (méth)acrylique a une masse moléculaire en nombre d'au moins 750 daltons, de préférence allant de 1000 à 10000 daltons.

4. Procédé selon l'une des revendications 1 à 3, **caractérisé en ce que** le monomère (méth)acrylique contient un acide carboxylique tel que l'acide (méth)acrylique dans des proportions pouvant aller jusqu'à 20% en poids par rapport au monomère (méth)acrylique.

5. Procédé selon l'une des revendications 1 à 4, **caractérisé en ce que** le monomère (méth)acrylique est un méthacrylate de méthoxy polyéthylène glycol, de préférence de masse moléculaire en nombre allant de 1000 et 6000 daltons.

6. Procédé selon l'une des revendications 1 à 5, **caractérisé en que** le monomère (méth)acrylique est introduit en mélange avec le(s) monomère(s) à polymériser.

7. Procédé selon l'une des revendications 1 à 6, **caractérisé en ce que** l'amorceur de polymérisation ionisable est choisi parmi les sels métalliques et ammoniacaux de l'acide 4,4' azobis (4-cyanopentanoïque), les sels du persulfate, tels que le persulfate de sodium, le persulfate de potassium et le persulfate d'ammonium, utilisés seuls ou en combinaison avec des réducteurs minéraux ou organiques tels que le bisulfite et le métasulfite de sodium ou de potassium, la vitamine C, les hypophosphites de sodium ou de potassium, le sodium formaldéhyde sulfoxylate, les couples rédox tels que le couple eau oxygénée/sel de l'ion ferreux, le couple (persulfate de sodium, potassium ou ammonium)/(métabisulfite de sodium ou de potassium), le couple (persulfate de sodium, potassium ou ammonium)/(sodium formaldéhyde sulfoxylate).

8. Procédé selon l'une des revendications 1 à 7, **caractérisé en ce que** le (ou les) monomère(s) polymérisable(s) est(sont) choisi(s) parmi un monomère vinylaromatique tel que le styrène ou les styrènes substitués notamment l'α-méthylstyrène et le styrène sulfonate de sodium, un diène tel que le butadiène ou l'isoprène, un monomère acrylique tel que l'acide acrylique ou ses sels, les acrylates d'alkyle, de cycloalkyle ou d'aryle tels que l'acrylate de méthyle, d'éthyle, de butyle, d'éthylhexyle ou de phényle, les acrylates d'hydroxyalkyle tel que l'acrylate de 2-hydroxyéthyle, les acrylates d'étheralkyle tel que l'acrylate de 2-méthoxyéthyle, les acrylates d'alcoxy- ou aryloxy-polyalkylèneglycol tels que les acrylates de méthoxypolyéthylèneglycol, les acrylates d'éthoxypolyéthylèneglycol, les acrylates de méthoxypolypropylèneglycol, les acrylates de méthoxy-polyethylèneglycol-polypropylèneglycol ou leurs mélanges, les acrylates, d'aminoalkyle tel que l'acrylate de 2-(diméthylamino)éthyle (ADAME), les acrylates de sel d'amines tels que le chlorure ou le sulfate de [2-(acryloyloxy)éthyl]triméthylammonium ou le chlorure ou le sulfate de [2-(acryloyloxy)éthyl]diméthylbenzylammonium, les acrylates fluorés, les acrylates silylés, les acrylates phosphorés tels que les acrylates de phosphate d'alkylèneglycol, un monomère méthacrylique comme l'acide méthacrylique ou ses sels, les méthacrylates d'alkyle, de cycloalkyle, d'alkényle ou d'aryle tels que le méthacrylate de méthyle, de lauryle, de cyclohexyle , d'allyle ou de phényle, les méthacrylates d'hydroxyalkyle tel que le méthacrylate de 2-hydroxyéthyle ou le méthacrylate de 2-hydroxypropyle, les méthacrylates d'étheralkyle tel que le méthacrylate de 2-éthoxyéthyle, les méthacrylates d'alcoxy- ou aryloxy-polyalkylèneglycol tels que les méthacrylates de méthoxypolyéthylèneglycol, les méthacrylates d'éthoxypolyéthylèneglycol, les méthacrylates de méthoxypolypropylèneglycol, les méthacrylates de méthoxy-polyethylèneglycol-polypropylèneglycol ou leurs mélanges, les méthacrylates d'aminoalkyle tel que le méthacrylate de 2-(diméthylamino)éthyle (MADAME) ou le méthacrylate de 2-(tert-butylamino)éthyle (MATBAE), les méthacrylates de sel d'amines tels que le chlorure ou le sulfate de [2-(méthacryloyloxy)éthyl]triméthylammonium ou le chlorure ou le sulfate de [2-(méthacryloyloxy)éthyl]diméthylbenzylammonium, les méthacrylates fluorés tels que le méthacrylate de 2,2,2-trifluoroéthyle, les méthacrylates silylés tels que le 3-méthacryloylpropyltriméthylsilane, les méthacrylates phosphorés tels que les méthacrylates de phosphate d'alkylèneglycol, le méthacrylate d'hydroxyéthylimidazolidone, le méthacrylate d'hydroxyéthylimidazolidinone, le méthacrylate de 2-(2-oxo-1-imidazolidinyl)éthyle, l'acrylonitrile, l'acrylamide ou les acrylamides substitués, la 4-acryloylmorpholine, le N-méthylolacrylamide, le chlorure d'acrylamidopropyltriméthylammonium (APTAC), l'acide acrylamidométhylpropane-sulfonique (AMPS) ou ses sels, le méthacrylamide ou les méthacrylamides substitués, le 2-méthyl-N-[2-(2-oxoimidazolidinyl)éthyl]acrylamide, le N-méthylolméthacrylamide, le chlorure de méthacrylamidopropyltriméthyl ammonium (MAPTAC), l'acide itaconique, l'acide maléique ou ses sels, l'anhydride maléique, les maléates ou hémimaléates d'alkyle ou d'alcoxy- ou aryloxy-polyalkylèneglycol, la vinylpyridine, la vinylpyrrolidinone, , les (alkoxy) poly(alkylène glycol) vinyl éther ou divinyl éther, tels que le méthoxy poly(éthylène glycol) vinyl éther, le poly(éthylène glycol) divinyl éther, les monomères oléfiniques, tels que l'éthylène, le butène, l'hexène et le 1-octène, ainsi que les monomères oléfiniques fluorés, et les monomères vinylidéniques, tel que le fluorure de vinylidène, utilisés seuls ou en mélange d'au moins deux monomères précités.

9. Utilisation d'un monomère (méth)acrylique de type ester ou amide (méth)acrylique de polyéthylène glycol ou de poly(éthylène-co-propylène) glycol ou de monoalkyl éther de polyéthylène glycol ou de monoalkyl éther de poly(éthylène-co-propylène) glycol, dans lequel le groupe alkyl contient de 1 à 18 atomes de carbone, et de préférence de 1 à 4 atomes de carbone pour stabiliser des latex obtenus par polymérisation en émulsion d'au moins un monomère polymérisable, en présence d'un amorceur de polymérisation ionisable et éventuellement d'un agent émulsifiant, **caractérisé en ce que** ledit monomère est introduit dans le milieu de polymérisation pendant au moins l'une des étapes de la polymérisation en émulsion.

10. Latex stabilisé de polymères, obtenu selon le procédé de l'une des revendications 1 à 8.

## Claims

1. A process for preparing a stabilized latex, by emulsion polymerization of at least one polymerizable monomer in the presence of a water-soluble polymerization initiator and of at least one emulsifier, **characterized in that** an ionizable water-soluble polymerization initiator is used and **in that** the emulsifier is at least partially replaced with stabilizing polymer molecules formed *in situ* by introduction of a (meth)acrylic monomer of the type such as a polyethylene glycol or poly(ethylene-co-propylene) glycol or polyethylene glycol monoalkyl ether or poly(ethylene-co-propylene) glycol monoalkyl ether (meth)acrylic ester or amide, in which the alkyl group contains from 1 to 18 carbon atoms and preferably from 1 to 4 carbon atoms, during at least one of the emulsion polymerization steps.

2. The process as claimed in claim 1, **characterized in that** the (meth)acrylic monomer is introduced into the polymerization medium in a proportion of from 0.05% to 30% and preferably from 0.1% to 10% by mass relative to the mass of monomer(s).

3. The process as claimed in claim 1 or 2, **characterized in that** the (meth)acrylic monomer has a number-average molecular mass of at least 750 daltons, preferably ranging from 1000 to 10 000 daltons.

4. The process as claimed in one of claims 1 to 3, **characterized in that** the (meth)acrylic monomer contains a carboxylic acid such as (meth)acrylic acid in proportions that may be up to 20% by weight relative to the (meth)acrylic monomer.

5. The process as claimed in one of claims 1 to 4, **characterized in that** the (meth)acrylic monomer is a methoxy polyethylene glycol methacrylate, preferably with a number-average molecular mass ranging from 1000 to 6000 daltons.

6. The process as claimed in one of claims 1 to 5, **characterized in that** the (meth)acrylic monomer is introduced as a mixture with the monomer(s) to be polymerized.

7. The process as claimed in one of claims 1 to 6, **characterized in that** the ionizable polymerization initiator is chosen from the metal and ammoniacal salts of 4,4'-azobis(4-cyanopentanoic acid), and persulfate salts, such as sodium persulfate, potassium persulfate and ammonium persulfate, which are used alone or in combination with mineral or organic reducing agents such as sodium or potassium bisulfite and metasulfite, vitamin C, sodium or potassium hypophosphite, or sodium formaldehyde sulfoxylate, redox pairs such as the hydrogen peroxide/ferrous ion salt pair, the (sodium, potassium or ammonium persulfate)/(sodium or potassium metabisulfite) pair or the (sodium, potassium or ammonium persulfate)/(sodium formaldehyde sulfoxylate) pair.

8. The process as claimed in one of claims 1 to 7, **characterized in that** the polymerizable monomer(s) is (are) chosen from a vinylaromatic monomer such as styrene or substituted styrenes, especially α-methylstyrene and sodium styrenesulfonate, a diene such as butadiene or isoprene, an acrylic monomer such as acrylic acid or salts thereof, alkyl, cycloalkyl or aryl acrylates such as methyl, ethyl, butyl, ethylhexyl or phenyl acrylate, hydroxyalkyl acrylates such as 2-hydroxyethyl acrylate, ether alkyl acrylates such as 2-methoxyethyl acrylate, alkoxy- or aryloxy-polyalkylene glycol acrylates such as methoxypolyethylene glycol acrylates, ethoxypolyethylene glycol acrylates, methoxypolypropylene glycol acrylates, methoxy-polyethylene glycol-polypropylene glycol acrylates or mixtures thereof, aminoalkyl acrylates such as 2-(dimethylamino)ethyl acrylate (DMAEA), acrylates of amine salts such as [2-(acryloyloxy)ethyl]trimethylammonium chloride or sulfate or [2-(acryloyloxy)-ethyl]dimethylbenzylammonium chloride or sulfate, fluoro acrylates, silyl acrylates, phosphorus acrylates such as alkylene glycol phosphate acrylates, a methacrylic monomer, for instance methacrylic acid or salts thereof, alkyl, cycloalkyl, alkenyl or aryl methacrylates such as methyl, lauryl, cyclohexyl, allyl or phenyl methacrylate, hydroxyalkyl methacrylates such as 2-hydroxyethyl methacrylate or 2-hydroxypropyl methacrylate, ether alkyl methacrylates such as 2-ethoxyethyl methacrylate, alkoxy- or aryloxy-polyalkylene glycol methacrylates such as methoxypolyethylene glycol methacrylates, ethoxypolyethylene glycol methacrylates, methoxypolypropylene glycol methacrylates, methoxy-polyethylene glycol-polypropylene glycol methacrylates or mixtures thereof, aminoalkyl methacrylates such as 2-(dimethylamino)ethyl methacrylate (DMAEMA) or 2-(tert-butylamino)ethyl methacrylate (TBAEMA), methacrylates of amine salts such as [2-(methacryloyloxy)ethyl]trimethylammonium chloride or sulfate or [2-(methacryloyloxy)ethyl]-dimethylbenzylammonium chloride or sulfate, fluoro methacrylates such as 2,2,2-trifluoroethyl methacrylate, silyl methacrylates such as 3-methacryloyl-propyltrimethylsilane, phosphorus methacrylates such as alkylene glycol phosphate methacrylates, hydroxyethyl-imidazolidone methacrylate, hydroxyethylimidazolidinone methacrylate, 2-(2-oxo-1-imidazolidinyl)ethyl methacrylate, acrylonitrile, acrylamide or substituted acrylamides, 4-acryloylmorpholine, N-methylolacrylamide, acrylamidopropyltrimethylammonium chloride (APTAC), acrylamidomethylpropanesulfonic acid (AMPS) or salts thereof, methacrylamide or substituted methacrylamides, 2-methyl-N-[2-(2-oxoimidazolidinyl)-ethyl]acrylamide, N-methylolmethacrylamide, methacryl-amidopropyltrimethylammonium chloride (MAPTAC), itaconic acid, maleic acid or salts thereof, maleic anhydride, alkyl or alkoxy or aryloxy-polyalkylene glycol maleates or hemimaleates, vinylpyridine, vinylpyrrolidinone, (alkoxy) poly(alkylene glycol) vinyl ethers or divinyl ethers, such as methoxy poly(ethylene glycol) vinyl ether, poly(ethylene glycol) divinyl ether, olefinic monomers such as ethylene, butene, hexene and 1-octene, and also fluoro olefinic monomers, and vinylidene monomers, such as vinylidene fluoride, used alone or as a mixture of at least two abovementioned monomers.

9. The use of a (meth)acrylic monomer of the type such as a polyethylene glycol or poly(ethylene-co-propylene) glycol or polyethylene glycol monoalkyl ether or poly(ethylene-co-propylene) glycol monoalkyl ether (meth)acrylic ester or amide, in which the alkyl group contains from 1 to 18 carbon atoms and preferably from 1 to 4 carbon atoms, for stabilizing the latices obtained by emulsion polymerization of at least one polymerizable monomer, in the presence of an ionizable polymerization initiator and optionally of a conventional emulsifier, **characterized in that** said monomer is introduced into the polymerization medium during at least one of the steps of the emulsion polymerization.

10. A stabilized polymer latex obtained according to the process of one of claims 1 to 8.

## Patentansprüche

1. Verfahren zur Herstellung eines stabilisierten Latex durch Emulsionspolymerisation mindestens eines polymerisierbaren Monomers in Gegenwart mindestens eines wasserlöslichen Polymerisationsstarters und mindestens eines Emulgators, **dadurch gekennzeichnet, dass** ein ionisierbarer wasserlöslicher Polymerisationsstarter verwendet wird und **dadurch**, dass der Emulgator zumindest zum Teil durch stabilisierende Polymermoleküle ersetzt wird, die in situ durch Einbringen eines (Meth)acrylmonomers vom Typ Polyethylenglycol(meth)acrylsäureester oder Polyethylenglycol(meth)acrylamid oder Poly(ethylen-co-propylen)glycol(meth)acrylsäureester oder Poly(ethylen-co-propylen)glycol(meth)acrylamid oder Polyethylenglycolmonoalkylether(meth)acrylsäureester oder Polyethylenglycolmonoalkylether(meth)acrylamid oder Poly(ethylen-co-propylen)glycolmonoalkylether(meth)acrylsäureester oder Poly(ethylen-co-propylen)glycolmonoalkylether(meth)acrylamid, wobei die Alkylgruppe 1 bis 18 Kohlenstoffatome und vorzugsweise 1 bis 4 Kohlenstoffatome aufweist, während zumindest einem der Schritte der Emulsionspolymerisation gebildet werden.

2. Verfahren nach Anspruch 1, **dadurch gekennzeichnet, dass** das (Meth)acrylmonomer in das Polymerisationsmedium in einer Menge von 0,05 bis 30 Gew.-% und vorzugsweise 0,1 bis 10 Gew.-%, bezogen auf die Masse des Monomers (der Monomere) gegeben wird.

3. Verfahren nach Anspruch 1 oder 2, **dadurch gekennzeichnet, dass** das (Meth)acrylmonomer eine zahlenmittlere Molmasse von mindestens 750 Dalton und vorzugsweise im Bereich von 1000 bis 10000 Dalton aufweist.

4. Verfahren nach einem der Ansprüche 1 bis 3, **dadurch gekennzeichnet, dass** das (Meth)acrylmonomer eine Carbonsäure wie (Meth)acrylsäure in Mengenanteilen von bis zu 20 Gew.-%, bezogen auf das (Meth)acrylmonomer, umfasst.

5. Verfahren nach einem der Ansprüche 1 bis 4, **dadurch gekennzeichnet, dass** es sich bei dem (Meth)acrylmonomer um Methoxypolyethylenglycolmethacrylat vorzugsweise mit einer zahlenmittleren Molmasse von 1000 bis 6000 Dalton handelt.

6. Verfahren nach einem der Ansprüche 1 bis 5, **dadurch gekennzeichnet, dass** das (Meth)acrylmonomer im Gemisch mit dem (den) zu polymerisierenden Monomer(en) eingearbeitet wird.

7. Verfahren nach einem der Ansprüche 1 bis 6, **dadurch gekennzeichnet, dass** der ionisierbare Polymerisationsstarter ausgewählt ist unter den Metallsalzen und Ammoniaksalzen von 4,4'-Azobis(4-cyanopentansäure), Persulfatsalzen, wie Natriumpersulfat, Kaliumpersulfat und Ammoniumpersulfat, die einzeln oder im Gemisch mit anorganischen oder organischen Reduktionsmitteln verwendet werden, wie Natrium- oder Kaliumbisulfit und Natrium- oder Kaliummetasulfit, Vitamin C, Natrium- oder Kaliumhypophosphiten, Natriumformaldehydsulfoxylat, Redoxpaaren, wie Wasserstoffperoxid/Eisen(II)salz, (Natrium-, Kalium- oder Ammoniumpersulfat) / (Natrium- oder Kaliummetabisulfit), (Natrium-, Kalium- oder Ammoniumpersulfat) / (Natriumformaldehydsulfoxylat).

8. Verfahren nach einem der Ansprüche 1 bis 7, **dadurch gekennzeichnet, dass** das (oder die) polymerisierbare(n) Monomer(e) ausgewählt sind unter einem vinylaromatischen Monomer, wie Styrol oder substituierten Styrolen, insbesondere α-Methylstyrol und Natriumstyrolsulfonat, einem Dien, wie Butadien oder Isopren, einem Acrylmonomer, wie Acrylsäure oder ihren Salzen, Alkylacrylaten, Cycloalkylacrylaten oder Arylacrylaten, wie Methylacrylat, Ethylacrylat, Butylacrylat, Ethylhexylacrylat oder Phenylacrylat, Hydroxyalkylacrylaten, wie 2-Hydroxyethylacrylat, Etheralkylacrylaten, wie 2-Methoxyethylacrylat, Alkoxy- oder Aryloxypolyalkylenglycolacrylaten, wie Methoxypolyethylenglycolacrylaten, Ethoxypolyethylenglycolacrylaten, Methoxypolypropylenglycolacrylaten, Methoxypolyethylenglycolpolypropylenglycolacrylaten, oder ihren Gemischen, Aminoalkylacrylaten, wie 2-(Dimethylamino)ethylacrylat (ADAME), Acrylaten von Aminsalzen, wie [2-(Acryloyloxy)ethyl]trimethylammoniumchlorid oder -sulfat oder [2-(Acryloyloxy)ethyl]dimethylbenzylammoniumchlorid oder - sulfat, fluorierten Acrylaten, silylierten Acrylaten, phosphorhaltigen Acrylaten, wie Alkylenglycolphosphatacrylaten, einem Methacrylmonomer, wie Methacrylsäure und ihren Salzen, Alkylmethacrylaten, Cycloalkylmethacrylaten, Alkenylmethacrylaten oder Arylmethacrylaten, wie Methylmethacrylat, Laurylmethacrylat, Cyclohexylmethacrylat, Allylmethacrylat oder Phenylmethacrylat, Hydroxyalkylmethacrylaten, wie 2-Hydroxyethylmethacrylat oder 2-Hydroxypropylmethacrylat, Etheralkylmethacrylaten, wie 2-Ethoxyethylmethacrylat, Alkoxy- oder Aryloxy-polyalkylenglycolmethacrylaten, wie Methoxypolyethylenglycolmethacrylaten, Ethoxypolyethylenglycolmethacrylaten, Methoxypolypropylenglycolmethacrylaten, Methoxy-polyethylenglycol-polypropylenglycolmethacrylaten oder deren Gemischen, Aminoalkylmethacrylaten, wie 2-(Dimethylamino)ethylmethacrylat (MADAME) oder 2-(tert-Butylamino)ethylmethacrylat (MATBAE), Methacrylaten von Aminsalzen, wie [2-(Methacryloyloxy)ethyl]trimethylammoniumchlorid- oder -sulfat oder [2-(Methacryloyloxy)ethyl]dimethylbenzylammoniumchlorid- oder - sulfat, fluorierten Methacrylaten, wie 2,2,2-Trifluorethylmethacrylat, silylierten Methacrylaten, wie 3-Methacryloylpropyltrimethylsilan, phosphorhaltigen Methacrylaten, wie Alkylenglycolphosphatmethacrylaten, Hydroxyethylimidazolidonmethacrylat, Hydroxyethylimidazolidinonmethacrylat, 2-(2-Oxo-1-imidazolidinyl)ethylmethacrylat, Acrylnitril, Acrylamid oder substituierten Acrylamiden, 4-Acryloylmorpholin, N-Methylolacrylamid, Acrylamidopropyltrimethylammoniumchlorid (APTAC), Acrylamidomethylpropan-sulfonsäure (AMPS) oder ihren Salzen, Methacrylamid oder substituierten Methacrylamiden, 2-Methyl-N-[2-(2-oxoimidazolidinyl)ethyl]acrylamid, N-Methylolmethacrylamid, Methacrylamidopropyltrimethylammoniumchlorid (MAPTAC), Itaconsäure, Maleinsäure oder ihren Salzen, Maleinsäureanhydrid, Alkylmaleaten oder Alkylhemimaleaten, Alkoxy- oder Aryloxy-polyalkylenglycolmaleaten oder Alkoxy- oder Aryloxy-polyalkylenglycolhemimaleaten, Vinylpyridin, Vinylpyrrolidinon, (Alkoxy)poly(alkylenglycol)-vinylethern oder - divinylethern, wie Methoxy-poly(ethylenglycol)-vinylether, Poly(ethylenglycol)-divinylether, olefinischen Monomeren, wie Ethylen, Buten, Hexen und 1-Octen, sowie fluorierten olefinischen Monomeren und Vinylidenmonomeren, wie Vinylidenfluorid, die einzeln oder als Gemisch von mindestens zwei der genannten Monomere verwendet werden.

9. Verwendung eines (Meth)acrylmonomers vom Typ Polyethylenglycol(meth)acrylsäureester oder Polyethylenglycol(meth)acrylamid oder Poly(ethylen-co-propylen)glycol(meth)acrylsäureester oder Poly(ethylen-co-propylen)glycol(meth)acrylamid oder Polyethylenglycolmonoalkylether(meth)acrylsäureester oder Polyethylenglycolmonoalkylether(meth)acrylamid oder Poly(ethylen-co-propylen)glycolmonoalkylether(meth)acrylsäureester oder Poly(ethylen-co-propylen)glycolmonoalkylether(meth)acrylamid, wobei die Alkylgruppe 1 bis 18 Kohlenstoffatome und vorzugsweise 1 bis 4 Kohlenstoffatome aufweist, zur Stabilisierung von Latices, die durch Emulsionspolymerisation mindestens eines polymerisierbaren Monomers in Gegenwart eines ionisierbaren Polymerisationsstarters und gegebenenfalls eines Emulgators gebildet werden, **dadurch gekennzeichnet, dass** das Monomer während zumindest einem der Schritte der Emulsionspolymerisation in das Polymerisationsmedium eingebracht wird.

10. Stabilisierter Latex von Polymeren, de nach dem Verfahren nach einem der Ansprüche 1 bis 8 erhalten wurde.
